# EUROPÄISCHE PATENTSCHRIFT

(11) **EP 0 561 361 B1**
(45) Veröffentlichungstag und Bekanntmachung des Hinweises auf die Patenterteilung: **02.01.1997**
(21) Anmeldenummer: 93104292.3
(22) Anmeldetag: 16.03.1993
(51) Int. Cl.: E05F 15/00, E05F 15/10, E05F 15/16

(54) **Verfahren zum Steuern von Torantrieben und Vorrichtung hierfür**
Method of controlling door actuators and device therefor
Procédé et dispositif pour commander des actionneurs de porte

(30) Priorität: 17.03.1992 DE 4208426
(43) Veröffentlichungstag der Anmeldung: 22.09.1993
(73) Patentinhaber: Alltronik electronics GmbH, D-99994 Schlotheim (DE)
(72) Erfinder: Trautmann, Roland, O-5701 Ammern (DE)
(74) Vertreter: Weber, Dieter, Dr.

(56) Entgegenhaltungen:
- EP-A- 0 162 799
- WO-A-81/01834
- WO-A-87/02090
- DE-A- 2 935 490
- US-A- 4 902 953
- US-A- 4 994 724

## Beschreibung

Die vorliegende Erfindung betrifft ein Verfahren für die Steuerung von Torantrieben gemäß Oberbegriff des Anspruchs 1, insbesondere von Antrieben für Garagentore und Tore an Einfahrten und dergleichen. Ebenso betrifft die vorliegende Erfindung auch einen entsprechenden angetriebenen Tor, insbesonders Garagen- oder Einfahrttor, gemäß dem Oberbegriff des Anspruchs 12. Derartige Verfahren und ein entsprechender Antrieb sind aus der EP-A-0 162 799 bekannt.

Mit entsprechenden Antriebseinrichtungen können alle Arten von Toren versehen sein, insbesondere wenn es sich um entweder sehr schwere oder nur umständlich zu erreichende Tore handelt. Garagentore können beiden Kategorien angehören, wobei die sogenannten automatischen Garagentorantriebe im allgemeinen mehr der Bequemlichkeit dienen, da der Benutzer beispielsweise lediglich über einen kleinen Handsender ein Steuersignal aussenden muß, das von einem Empfänger am oder in der Nähe des Garagentorantriebes empfangen wird, der daraufhin den Antrieb in Bewegung setzt.

Ein gewisses Problem stellt dabei jedoch zum einen der sich während der Torbewegung mit unter stark ändemde Kraftbedarf für den Antrieb dar, zum anderen aber auch die Handhabung bzw. der Umgang mit Störungen. Die Anpassung an den sich ändernden Kraftbedarf erfolgt im Regelfall durch elektronische bzw. elektrische Schaltungen, bei welchen teilweise erhebliche Verlustleistungen in Kauf genommen werden. Das Verhalten des Antriebs bei Störungen jedoch stellt ein weitgehend ungelöstes Problem dar. Auch hier sind zwar im Prinzip Schutzschaltungen denkbar, die den Antrieb stoppen, wenn sich in dem Verfahrweg des Tores ein Hindernis befindet, jedoch sind derartige Schaltungen relativ aufwendig und kompliziert, wenn sie z.B. auch sicherstellen sollen, daß eine Person, die von dem sich bewegenden Tor erfaßt wird, nicht auch erheblich verletzt wird, bevor das Tor zum Stillstand kommt. Dies gilt umso mehr, als der Kraft- und Energiebedarf für die Betätigung des Tores ohnehin entlang des Verfahrweges beträchtlich variieren kann, dieser Kraft- und Energiebedarf mithin kein einfach zu handhabendes Sicherheitskriterium darstellt.

Bekannt sind auch sogenannte Endschalter, die so positioniert sind, daß sie entweder von dem Tor selbst oder von entsprechenden Antriebseinrichtungen genau in dem Moment erfaßt werden, in dem das Tor seine vollständig geschlossene, oder aber seine vollständig geöffnete Position einnimmt und die dann den Antrieb bzw. den Antriebsmotor durch diese Betätigung abschalten.

Der Antrieb wird dann erst wieder durch ein entsprechendes Startsignal in der gewünschten Richtung in Bewegung gesetzt.

Das aus der EP-A-162 799 bekannte System ist ausschließlich für Schiebetore vorgesehen, die im allgemeinen für die Öffnungs- und Schließbewegung einen konstanten Kraftbedarf haben. Dabei ist jedoch vorgesehen, in der Nähe der Endpositionen die Torbewegung zu verlangsamen. Hierzu wird die Torposition mit einem entsprechenden Decoder erfaßt und die Energiezufuhr folgt entsprechend der Torposition, d.h. sie ist geringer, wenn der Decoder anzeigt, daß das Tor sich einer der Endpositionen nähert und ist im mittleren Bereich im wesentlichen konstant. Das System sieht auch den Stopp und die Umkehr der Torbewegung vor, wenn das Tor bei der Schließbewegung auf einen Widerstand trifft.

Aus der DE-A-29 35 490 ist ein Positionierantrieb mit Hilfsmotor bekannt, bei welchem ein Meßgetriebe mit eingebautem Potentiometer als Positionsmeßinstrument vorgesehen ist. Dieses System verwendet jedoch neben dem antreibenden Wechselstrom- bzw.Drehstrommotor noch ein oder zwei weitere Hilfsmotoren, die bei Ausfall der Hauptstromversorgung durch Notstromversorgungen angetrieben werden sollen. Dabei werden die Endstellungen eines Tores jeweils durch einstellbare Potentiometer vorgegeben, wobei die Spannungsdifferenz zwischen dem die aktuelle Torstellung definierenden Potentiometer und den Endpotentiometern dann am größten ist, wenn das Tor bzw. die Tür von einer dieser Endstellungen besonders weit entfernt ist. Hierdurch läuft das Tor mit hoher Geschwindigkeit im mittleren Öffnungsbereich und mit geringer Geschwindigkeit in der Nähe der beiden Endstellungen. Auch dabei wird jedoch die Energiezufuhr nicht einem sich während des Öffnens variierenden Kraftbedarf angepaßt. Die beiden vorgenannten Systeme sind elektronisch relativ aufwendig und kompliziert.

Gegenüber diesem Stand der Technik gemäß der EP-A-0 162 799 liegt der vorliegenden Erfindung die Aufgabe zugrunde, ein Verfahren zum Steuern von Torantrieben und auch einen entsprechenden angetriebenen bzw. eine Steuerung hierfür zu schaffen, welche nicht nur eine gut angepaßte Energieversorgung ohne große Verlustleistungen für einen elektrischen Antriebsmotor gewährleisten, sondern auch einen relativ einfachen elektronischen Aufbau haben und auch in relativ einfacher Weise gegen Störungen jeglicher Art zu sichern sind.

Hinsichtlich des Verfahrens wird diese Aufgabe durch die in Anspruch 1 wiedergegebenen Merkmale gelöst, hinsichtlich der Vorrichtung erfolgt die Lösung der Aufgabe durch die Merkmale des Anspruchs 12.

Nach dem erfindungsgemäßen Verfahren wird also die Position des Garagentores in jedem Bewegungszustand erfaßt und die Energiezufuhr eines Antriebsmotors in Abhängigkeit von der so erfaßten Torposition geregelt.

Da der Energiebedarf für das Öffnen und Schließen eines Tores, sofern er nicht konstant ist, im Normalzustand ausschließlich von der jeweiligen Position des Tores abhängt, kann diese Energiezufuhr dem auf diese Weise indirekt erfaßten Energiebedarf angepaßt werden, gleichzeitig sind aber auch Störungen leicht erkennbar, wenn nämlich die tatsächlich erforderliche Energie von dem zu dieser Position gehörigen Bedarf abweicht.

Die Torposition wird gemäß der Erfindung in eine sich mit der Position verändernde elektrische Spannung umgesetzt, die gemessen und mit einem Sollwert verglichen wird, wobei die Energiezufuhr für den Motor und/oder auch die Motordrehrichtung in Abhängigkeit von der Differenz zwischen Ist- und Sollwert variiert wird. Bei einer solchen Vorgehensweise ist es beispielsweise möglich, eine zu große Abweichung zwischen Ist- und Sollwert als Störung zu erkennen und die gewünschten Reaktionen auszulösen, d.h. entweder z.B. einen Störungsalarm auszulösen und/oder die Energiezufuhr zum Antrieb zu stoppen.

Dabei nimmt der Sollwert nach einem vorgebbaren Startsignal innerhalb eines vorgebbaren Zeitintervalls kontinuierlich zu oder ab. Das Zu- oder Abnehmen des Sollwertes bestimmt dabei die Richtung, in welcher das Tor verfahren werden soll.

Wie bereits erwähnt, kann in der bevorzugten Ausführungsform der Erfindung bei Überschreiten eines Grenzwertes für den Betrag der Differenz zwischen Soll- und Istwert ein Alarmsignal oder gegebenenfalls auch ein Motorstoppsignal ausgelöst werden.

Dabei ist es besonders zweckmäßig, wenn als Regelparameter auch die von einem Startsignal für den Antrieb an verstrichene Zeit verwendet wird. Insbesondere erlaubt der zweite Regelparameter Zeit auch die Einstellung der Geschwindigkeit des Öffnungs- bzw. Schließvorganges des Tores und läßt auch plötzlich auftretende Störungen aufgrund einer sich mit der Zeit plötzlich ändemden Energiezufuhr oder einer sich plötzlich ändernden Verfahrgeschwindigkeit des Tores erkennen.

Nach der Erfindung wird das gemessene Differenzsignal (zwischen Soll- und Istwert) in einem Verstärker verstärkt und dem Motor als Betriebsspannung zugeführt wird. Wie man leicht erkennt, erhält der Motor dann eine relativ kleine Betriebsspannung, wenn der Istwert nahe beim Sollwert liegt, d.h. wenn die in Form einer sich ändemden Spannung erfaßte Torposition der sich ändernden vorgegebenen Spannung relativ nahe kommt, bzw. das Tor die so definierte Bewegung unter Anpassung des Positionswertes an den Sollwert ausführt.

Dabei wird eine Ausführungsart des Verfahrens bevorzugt, bei welcher der Verstärkungsfaktor für kleine Differenzspannungen unterhalb eines vorgebbaren Schwellwertes größer ist als für Differenzspannungen oberhalb dieses Schwellwertes. Konkret sollte der Verstärkungsfaktor für kleinere Differenzspannungen zwischen zwei- und zehnmal, vorzugsweise fünfmal so groß sein wie der Verstärkungsfaktor für große Differenzspannungen.

Dies führt in vorteilhafter Weise dazu, daß die Betriebsspannung schon bei kleinen Abweichungen der Istposition des Tores von der Sollposition relativ schnell erhöht wird, so daß der Motor entsprechend schnell reagiert und das Tor näher an die Sollwertposition heranbewegt. Andererseits sollen die Betriebsspannungen aber auch nicht allzu schnell auf sehr große Werte anwachsen, weil dieses den Motor erheblich belasten könnte, so daß für größere Differenzen des Ist- vom Sollwertes nur noch eine kleinere zusätzliche Verstärkung vorgesehen ist, die in jedem Fall unter einer maximal zulässigen Betriebsspannung für den Antriebsmotor bleibt, indem z. B. ein Begrenzer für die Maximalspannung in das Gerät eingebaut wird.

Für die Anzeige einer Störung kann es wegen der in eine Betriebsspannung umgesetzten Differenz zwischen Istposition und Sollposition des Tores auch zweckmäßig sein, wenn die Betriebsspannung selbst für das Erfassen von Störungen verwendet wird. Wenn also die Betriebsspannung vorgebbare Grenzwerte überschreitet, so kann ebenfalls ein Alarm- oder Stoppsignal ausgelöst werden. Dabei kann es zweckmäßig sein, wenn die jeweiligen Grenzwerte für die Betriebsspannung selbst positionsabhängig sind, so daß das Auslösen eines Alarm- oder Stoppsignals bei einer gegebenen Betriebsspannung auch davon abhängt, in welcher Position das Tor sich gerade befindet. Während eine bestimmte Betriebsspannung in bestimmten Torpositionen als zulässig angesehen werden kann, weil in der betreffenden Position das Tor nur mit großem Kraftaufwand zu bewegen ist, kann also der gleiche Betriebsspannungswert ein Alarm- oder Stoppsignal auslösen, wenn er in einer Torposition auftritt, die an sich viel weniger Kraftaufwand für die Bewegung des Tores erfordern würde.

Zweckmäßigerweise werden diese Grenzwerte und die zugehörigen Positionen des Tores in Form einer Tabelle gespeichert.

In den Endpositionen des Tores liegt jeweils ein fester Spannungswert als Positions-Istwert vor, wobei erfindungsgemäß vorgesehen ist, daß die Anfangs- und Endwerte der Sollwertvorgabe genau diesen Spannungswerten der Istposition am Anfang und am Ende des Verfahrweges des Tores entsprechen. Da die Differenzspannung zwischen Soll- und Istwert in diesen Endpositionen des Tores dann unmittelbar auf Null gesetzt wird, wird dem Motor in dieser Position auch keine Betriebsspannung zugeführt, die ja lediglich die verstärkte Differenzspannung zwischen Soll- und Istwert ist. Der Antrieb braucht daher nicht als Ganzes abgeschaltet zu werden, sondern kann in diesem Zustand bleiben, bis ein entsprechendes Startsignal, das beispielsweise von einem stationären Schalter, oder aber auch von einem codierten Handsender ausgehen kann, eine Sollwertänderung auslöst, welcher dann das Tor durch Anpassung des Istwertes folgt. Der nur sehr wenig Energie verbrauchende Bereitschaftszustand des Antriebes in den Endpositionen des Tores kann mit Vorteil auch für Störungsmeldungen genutzt werden, die beispielsweise durch unbefugtes und gewaltsames Öffnen eines Tores ausgelöst werden. In diesem Fall wird nämlich die Istposition des Tores gegenüber der Sollwertposition verändert, ohne daß ein entsprechendes Startsignal gegeben wurde, wobei außerdem ein weiteres Öffnen den Istwert immer weiter vom Sollwert entfernt, was zum einen den Motor mit immer höherer Betriebsspannung in Gegenrichtung antreibt und schließlich auch zur Auslösung des Alarm- oder Stoppsignales führt.

Daneben kann es auch zweckmäßig sein, weitere feste Spannungswerte als anzusteuernde Sollwerte vorzugeben, was es ermöglicht, das Tor auch gezielt in bestimmte Positionen zu steuern, in denen es dann durch den Regelkreis gehalten wird. So können beispielsweise große Tore für die Durchfahrt von sehr kleinen Fahrzeugen oder für den Durchgang von Personen nur zum Teil geöffnet werden, wenn der Sollwert nicht über den gesamten möglichen Bereich variiert, sondern bei dem vorgesehenen Zwischenwert stoppt.

Die Steuerung des Antriebes sowie der Antriebes selbst, der im allgemeinen mindestens einen elektrischen Antriebsmotor, Kraftübertragungseinrichtungen vom Motor auf das Tor und Einrichtungen für das Starten und Stoppen des Antriebsmotors zumindest in den beiden Endpositionen des Tores aufweist, von denen eine einem vollständig geöffneten und eine einem vollständig geschlossenen Tor entspricht, hat am Motor, am Tor oder an den Kraftübertragungseinrichtungen einen Positionsmelder, der einen von einer Meßeinheit erfaßbaren und einer jeweiligen Torposition eindeutig zugeordneten Zustand annimmt, wobei eine entsprechende Meßeinheit zum Erfassen dieser Position vorgesehen ist und wobei außerdem ein Ausgang dieser Meßeinheit direkt oder indirekt mit einem Steuerteil verbunden ist, welches die Energiezufuhr zum Antriebsmotor steuert.

Dieser Positionsmelder ist ein Potentiometer. Es ist klar, daß dann die Bewegung des Tores bzw. der Antriebselemente für das Tor auf ein Betätigungselement des Potentiometers übertragen wird, so daß an dem Potentiometer eine sich ändernde Spannung abgegriffen werden kann.

Die Meßeinheit ist ein Regler mit einem Differenzeingang, an welchem einerseits die Spannung des Potentiometers und an welchem andererseits eine variable Sollwertspannung anliegt. Selbstverständlich kann die Spannung am Mittenabgriff des Potentiometers auch durch ein getrenntes, vorgeschaltetes Meßgerät erfaßt, verstärkt bzw. herabgesetzt und in dieser Form auf den Differenzeingang des Reglers gegeben werden.

Zur Erzeugung des Sollwertes ist ein eine kontinuerliche Zu- oder Abnahme der Sollwertspannung gewährleistenden Integrator vorgesehen, dessen Ausgang mit dem zweiten Pol des Differenzeinganges des Reglers verbunden ist.

Dabei hat es sich als zweckmäßig erwiesen, daß das Potentiometer ein mehrgängiges, vorzugsweise ein zehngängiges Wendelpotentiometer ist. Ein mehrgängiges Wendelpotentiometer kann zum einen relativ leicht und zum andern auch relativ genau einen ziemlichen großen Verfahrweg von Antriebselementen bzw. von Teilen des Tores selbst aufnehmen, löst also die Position in entsprechend gut unterscheidbare Spannungswerte sehr fein auf.

Es versteht sich, daß hierzu das Potentiometer mit beweglichen Teilen des Motors oder des Tores zwangsgekoppelt sein sollte.

Bevorzugt ist dabei eine Ausführungsform der Erfindung, bei welcher das Potentiometer über ein Zwischengetriebe mit der Motorwelle verbunden ist. Das Zwischengetriebe dient dabei vor allem dazu, die insgesamt für den vollständigen Verfahrweg erforderlichen Umdrehungen der Motorwelle in eine Zahl von Umdrehungen zu untersetzen, welche der Maximalzahl von Drehungen eines entsprechenden Wendelpotentiometers (Gängigkeit) entspricht.

In der bevorzugten Ausführungsform der Erfindung liegt eine Spannungsquelle und zwar eine solche mit möglichst konstanter Spannung, an den beiden Endanschlüssen des Potentiometers, wobei der Mittenabgriff des Potentiometers am Eingang des Meßgerätes liegt, so daß also die Spannung zwischen dem Mittenabgriff und einem der Endanschlüsse, der mit dem zweiten Eingang bzw. dem Bezugspunkt der Meßeinheit verbunden ist, abgegriffen wird.

Vorteilhaft ist es außerdem, wenn sowohl der Integrator als auch das Potentiometer von derselben Spannungsquelle mit einer möglichst konstanten Spannung versorgt werden. Das System ist dann Störungen gerade kompensieren. Der Integrator wird durch ein Startsignal ausgelöst, wobei die Spannung an seinem Ausgang beispielsweise kontinuierlich zunimmt, wobei der Regler, der die Differenz zum Istwert mißt und an seinem Verstärkerausgang eine entsprechende Betriebsspannung für den Motor liefert, das Tor so nachführt, daß die am Wendenpotentiometer gemessene Positionsspannung immer nahe am Sollwert liegt. Da dieser Sollwert kontinuierlich zunimmt, wird auch das Tor kontinuierlich nachgefahren, bis der Sollwert einen vorgebbaren Endwert erreicht hat, bei welchem die Spannung am Ausgang des Integrators nicht weiter zunimmt. Für die Umkehrung des Bewegungsablaufes nimmt die Spannung am Integrator ebenso kontinuierlich ab, wobei unter Umkehrung der Drehrichtung des Motors wiederum das Tor so nachgefahren wird, daß die am Wendelpotentiometer gemessene Spannung ebenfalls kontinuierlich abnimmt und der Sollwertspannung folgt, bis diese bei einem unteren Endwert stoppt. Diese unteren und oberen Spannungsendwerte des Integrators werden zweckmäßigerweise durch Einstelleinrichtungen nachjustiert, die zweckmäßigerweise ebenfalls Potentiometer sind, wobei eine grobe Voreinstellung bereits bei der werkseitigen Installation bzw. dem Zusammenbau des Antriebes erfolgen kann, während vor Ort mit dem eingebauten Tor dann die Feineinstellung vorgenommen wird.

Zusätzlich sollte auch noch eine Einstelleinrichtung, zweckmäßigerweise ebenfalls ein Potentiometer, für die Einstellung der Zeitkonstante des Integrators vorgesehen sein, so daß also durch diese Einstellung die Zeit festgelegt werden kann, innerhalb welcher sich der Spannungswert am Integrator zwischen seinen beiden Endwerten ändert.

Schließlich ist erfindungsgemäß auch ein Störungsindikator vorgesehen, der beispielsweise als separates Bauteil ausgestaltet sein kann und der der Einfachheit halber mit dem Ausgang des Regelverstärkers verbunden wird, wobei der Störungsindikator obere und untere Grenzwerte für die Ausgangsspannung des Regelverstärkers gespeichert hat und bei Überschreiten dieser Grenzwerte entweder einen Alarm oder ein Stoppsignal für den Antriebsmotor auslöst. Wie bereits erwähnt, kann dieser Störungsindikator auch eine Speichereinrichtung für eine große Anzahl von Grenzwerten aufweisen, die paarweise jeweils bestimmten Positionswerten zugeordnet werden, wobei es sich versteht, daß der Störungsindikator an seinem Eingang auch mit dem Mittenabgriff des Potentiometers verbunden sein muß, welches die jeweilige Position anzeigt, damit der Störungsindikator dieser Position die zugehörigen, in der Tabelle gespeicherten Grenzwerte zuordnen kann.

Weitere Vorteile und Anwendungsmöglichkeiten der vorliegenden Erfindung ergeben sich aus der folgenden Beschreibung bevorzugter Ausgestaltungen und der dazugehörigen Figuren. Es zeigen:
- Figur 1: ein Blockschaltbild, welches das Prinzip der Steuerung des Antriebes veranschaulicht und
- Figur 2: schematisch die Kennlinien des Verstärkers 3 aus Figur 1.

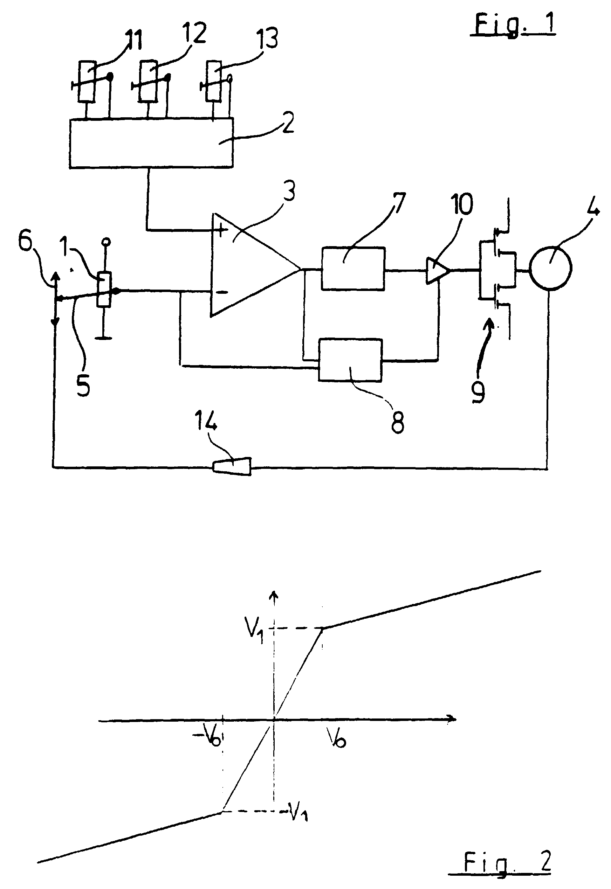

In Figur 1 ist mit 4 ein schematisch dargestellter Antriebsmotor bezeichnet, der über ein Zwischengetriebe 14 mit einem Stellglied 5 eines Potentiometers 1 verbunden ist. Das Stellglied 5 ist entlang des als Doppelpfeil 6 gekennzeichneten Verstellweges bewegbar. Konkret wird bei der praktischen Verwirklichung z.B. die Antriebswelle des Motors 4 über einen Zahnriemen mit der Welle eines Zehnwendelpotentiometers 1 verbunden.

Das Potentiometer ist mit seinem einen Endanschluß geerdet, der andere liegt auf einer Spannung U0, die durch eine nicht dargestellte Konstantspannungsquelle bereitgestellt wird. Der durch das Stellglied 5 verschiebbare Mittenabgriff des Potentiometers ist mit einem mit "Minus" bzw. " - " gekennzeichneten Eingang eines Differenzverstärkers 3 verbunden. Der zweite mit "Plus" bzw " + " gekennzeichnete Eingang des Differenzverstärkers ist mit einem Integrator 2 verbunden. Wenn der Integrator 2 durch einen Schalter oder ein von außen vorgebbares Signal (nicht näher dargestellt) gestartet wird, so steigt an seinem mit dem Differenzverstärker 3 verbundenen Ausgang die Ausgangsspannung kontinuierlich an, so daß, anfänglich gleiche Spannungen an den Eingängen des Differenzverstärkers vorausgesetzt, die nunmehr auftretende Differenz der Eingangsspannungen durch den Verstärker 3 verstärkt wird und über die Bauteile 7, 10 und 9 in verstärkter Form dem Motor 4 als Betriebsspannung zugeführt wird. Der Motor 4 beginnt daraufhin zu drehen, und zwar in der Richtung, daß das über das Getriebe 14 bewegte Stellglied 5 des Potentiometers 1 so eingestellt wird, daß die Spannung am Mittenabgriff des Potentiometers 1 sich in Richtung der Ausgangsspannung des Integrators verschiebt, um die Differenz an den Eingängen des Differenzverstärkers 3 zu verringern. Mit 9 ist in Figur 1 ein Bauteil bezeichnet, welches den für den Betrieb des Motors, bei Aufrechterhaltung der vom Regelteil vorgegebenen Spannung, erforderlichen Strom zur Verfügung stellt, konkret ist dieses Bauteil im dargestellten Beispiel eine sogenannte Leistungsbrückenendstufe. Das Bauteil 7 stellt einen Spannungsbegrenzer dar, welcher verhindert, daß beim Auftreten einer sehr großen Differenz an den Eingängen des Verstärkers 3 dem Motor 4 eine zu hohe Betriebsspannung zugeführt wird. Mit 10 ist ein Gatter bzw. eine Torschaltung bezeichnet, die von einem Störungsindikator 8 steuerbar ist. Der Störungsindikator 8 ist mit dem Ausgang des Differenzverstärkers 3 verbunden und schließt das Gatter 10 auch in solchen Fällen, wo zwar der Spannungsbegrenzer 7 noch nicht wirksam wird, wo jedoch ein für die jeweilige Torposition gegenüber dem Normalbetrieb zu hoher Spannungswert festgestellt wird.

Außerdem ist der Störungsindikator 8 auch mit dem Mittenabgriff des Potentiometers 1 verbunden und kann so ebenfalls das Gatter 10 schließen, wenn am Mittenabgriff beispielsweise die Spannung Null oder die Gesamtspannung U0 anliegt, was bedeutet, daß sich das Stellglied 5 in einem der beiden Endausschläge befindet, in welchem das Tor vollständig geschlossen oder vollständig geöffnet ist, so daß der Motor 4 gestoppt werden kann und muß, insbesondere um das Stellglied 5 des Potentiometers 1 nicht zu überdrehen. Dabei kann der Störungsindikator 8 auch schon kurz vor Erreichen dieser Grenzwerte ansprechen.

Der Integrator 2 weist insgesamt drei Einstellelemente 11, 12, 13 auf, mit deren Hilfe vor Ort die Feineinstellung vorgenommen wird. Diese Einstellelemente sind ebenfalls als Potentiometer (Schiebe- oder Wendelpotentiometer) dargestellt. Das Potentiometer 11 dient dazu, die maximale Ausgangsspannung des Integrators 2 festzulegen. Zunächst wird ab Werk eine grobe Voreinstellung vorgenommen. Bei einem montierten Tor- und Antriebssystem wird dann der Integrator 2 gestartet und damit auch der Antrieb des Tores ausgelöst. Die interne Voreinstellung des Integrators 2 wird dabei sicherheitshalber so gewählt, daß bei der von dem Integrator 2 dann ausgegebenen Maximalspannung das Tor seine Endstellung noch nicht erreicht hat. Mit Hilfe des Einstellpotentiometers 11 wird dann der Maximalwert am Ausgang des Integrators erhöht, so daß über den Motor 4 sowohl das Tor als auch das Türglied 5 des Potentiometers 1 nachgefahren werden, bis die gewünschte Endposition erreicht ist.

Anschließend wird ein Signal an den Integrator 2 gegeben, das seinen Rücklauf zu kleinen Spannungen hin startet. Die Spannung am "Plus"-Eingang des Verstärkers 3 wird dann unter die am "Minus"-Eingang anliegende Spannung abgesenkt, wobei die so geänderte Polarität der Eingänge auch dazu dient, die geänderte Drehrichtung des Motors 4 festzulegen. Die Ausgangsspannung des Differenzverstärkers 3, die aufgrund der Differenz der Eingänge auftritt, wird wiederum als Betriebsspannung dem Motor 4 zugeführt, der nun sowohl das Tor als auch, über das Zwischengetriebe 14, das Stellglied 5 des Potentiometers 1 in Richtung der anderen Endstellung zurückfährt. Das Tor stoppt erst dann, wenn der Integrator 2 an seinem Ausgang einen minimalen Spannungswert angenommen hat, auf den auch der Mittenabgriff des Potentiometers 1 über das Nachfahren des Stellgliedes abgesenkt wird. Sofern diese Position nicht der gewünschten Endstellung des Tores entspricht, wovon zu Beginn der Einstellung auszugehen ist, wird über das Einstellpotentiometer 12 der Minimalwert am Ausgang des Integrators 2 in Richtung kleinerer Spannungen nachjustiert, bis das Tor über die Rüdkkopplung der Positionsmeldung mit Hilfe des Potentiometers 1 in die gewünschte Endstellung gefahren worden ist.

Das Einstellpotentiometer 13 dient schließlich dazu, die Zeitkonstante des Integrators 2 festzulegen und damit auch die Zeit, die der Integrator 2 benötigt, um den Spannungswert an seinem Ausgang vom Minimalwert auf den Maximalwert und umgekehrt zu ändern. Diese Zeit entspricht dann auch im wesentlichen der Dauer eines Öffnungs- oder Schließvorganges des Tores. Um einerseits ein schnelles Ansprechen der Steuerschaltung und damit auch des Torantriebes auf das vom Integrator 2 vorgegebene Ausgangssignal zu gewährleisten, andererseits jedoch auch Überlastungen des Antriebes und Störungen des Betriebes weitgehend zu vermeiden, hat der Verstärker 3 vorzugsweise eine sogenannte "Knickkennlinie", wie sie in idealisierter Form in Figur 2 dargestellt ist. In Figur 2 ist in Richtung der vertikalen Achse die Ausgangsspannung des Differenzverstärkers 3 aufgetragen, die gleichzeitig die Betriebsspannung des Motors 4 darstellt. Entlang der horizontalen Achse ist die an den Eingängen "Plus" und "Minus" anliegende Differenzspannung aufgetragen. Die Skalierungen der Achsen müssen dabei nicht notwendigerweise gleich sein.

Innerhalb eines kleinen Bereiches der Differenzspannung zwischen -V0 und +V0 ist der durch die Steigung der Kennlinie definierte Verstärkungsfaktor des Verstärkers 3 relativ groß, d.h. es wird zunächst schon bei sehr kleinen Spannungsdifferenzen an den Eingängen des Verstärkers 3 eine vergleichsweise große Betriebsspannung für den Motor 4 zur Verfügung gestellt, der sich entsprechend schnell in Bewegung setzt. Das System reagiert also sofort auf kleine Änderungen der am Potentiometer 1 abgegriffenen Spannung gegenüber der am Ausgang des Integrators 2 abgegriffenen Spannung und versucht durch Nachstellen des Tores und damit auch des Stellgliedes 5 des Potentiometers 1 den "Minus"-Eingang immer auf den Wert des "Plus"-Einganges zu ziehen. Wächst jedoch die Differenz der Eingangsspannungen über +V0 an (oder sinkt sie unter -V0 ab), so nimmt die Ausgangsspannung des Integrators jenseits dieser Grenze wesentlich langsamer zu als vorher. Dabei wird der Wert für V0 und auch der Wert der zugehörigen Ausgangsspannung des Verstärkers 3 zweckmäßigerweise so gewählt, daß die Betriebsspannung des Motors 4 im Normalbetrieb jenseits der Werte V1 bzw. -V1 liegt. Man erreicht mit einer solchen Kennlinie, daß einerseits der Motor zwar sehr schnell anspricht, andererseits jedoch beim Auftreten größerer Differenzspannungen auch nicht allzu heftig reagiert und das Tor relativ gleichmäßig geöffnet oder geschlossen wird, wobei der Nachlauf der Potentiometerspannung gegenüber der Integratorspannung relativ gering ist und wobei außerdem gewährleistet ist, daß auch bei einer vergleichsweise geringen Differenz zwischen Integratorspannung und Potentiometerspannung immer noch genügend Betriebsspannung für den Motor 4 zur Verfügung steht, um diesen weiterzubewegen, bis die Spannungsdifferenz am Eingang des Verstärkers 3 einen vernachlässigbaren Wert angenommen hat.

Nicht dargestellt sind in Figur 2 zusätzliche Grenzwerte für die Betriebsspannung oder die Differenzspannung, welche entweder die Strombegrenzungsschaltung 7 oder den Störungsindikator 8 in Aktion treten lassen.

Wie man aus der vorstehenden Beschreibung leicht erkennt, ist es ohne weiteres möglich, den Integrator 3 auf weitgehend beliebige Spannungsendwerte zu fahren, wobei z.B. durch einfache Umschalter die durch die Einstellpotentiometer 11 und 12 gewählten Werte variiert werden können, so daß das Tor z.B. in einer Zwischenposition stehen bleibt. Auch Störungen, z.B. beim Blockieren des Tores durch einen Gegenstand oder durch eine Person, werden sofort dadurch erfaßt, daß die Differenzspannung plötzlich ansteigt und damit auch die am Ausgang des Verstärkers auftretende Betriebsspannung des Motors einen zu hohen Wert annimmt, wobei der Störungsindikator 8 das Kriterium für "zu hohe" Spannungswerte am Ausgang des Verstärkers 3 auch in Beziehung zu der jeweiligen Torposition setzen kann, die ihm über die Verbindung zum Mittenabgriff des Potentiometers 1 zur Verfügung gestellt wird. In dem Störungsindikator 8 kann also zweckmäßigerweise eine Tabelle abgespeichert werden, weiche bestimmte Bereiche der Spannungswerte des Potentiometers 1 bestimmten Grenzwerten für die Spannung am Ausgang des Verstärkers 3 zuordnet, die jeweils nicht überschritten werden dürfen. Der Störungsindikator blockiert dann sofort über Schließen des Gatters 10 jede weitere Energiezufuhr zum Motor 4, der damit stehenbleibt.

Schließlich kann in einer weiteren, nicht dargestellten Ausführungsform der Erfindung auch ein "Handbetrieb" für das jeweilige Tor vorgesehen werden, indem z.B. über ein Potentiometer die Spannung am "Plus"-Eingang des Verstärkers 3 kontinuierlich verändert wird. Hierfür kann man z.B., ebenso wie auch im Falle des Potentiometers 1, ein Zehnwendel-Potentiometer verwenden, das mit einem kleinen Kurbelantrieb ausgerüstet ist, wobei die Kurbeldrehungen die gewünschte Spannungsänderung am "Plus"-Eingang des Differenzverstärkers 3 hervorrufen und damit der "Minus"-Eingang über den Antrieb des Motors 4 nachgefahren wird.

Auch unerwünschte Manipulationen an dem Tor können mit Hilfe der erfindungsgemäßen Steuerschaltung erfaßt und mit einem Alarmsignal belegt werden. Abgesehen davon, daß schon die Selbsthemmung des Motorgetriebes ein gewaltsames Öffnen eines geschlossenen Tores im allgemeinen verhindert, so würde selbst die Überwindung dieser Selbsthemmung dazu führen, daß mit der Motorwelle oder einem beliebigen anderen Teil des Torantriebes, mit welchem das Stellglied 5 des Potentiometers 1 wirksam verbunden ist, eben dieses Stellglied 5 verstellt würde und damit eine Spannung am Eingang des Verstärkers 3 auftritt, die verstärkt wird und den Motor 4 in Gegenrichtung antriebt. Ein gewaltsames Festhalten bzw. Aufziehen des Tores hätte dann automatisch zur Folge, daß die im Störungsindikator gespeicherten Grenzwerte überschritten werden, so daß ein entsprechender Alarm ausgelöst werden könnte.

Dabei kann außerdem vorgesehen werden, daß ein solcher Alarm nur bei bestimmten Grenzwertüberschreitungen und bei bestimmten Ausgangspositionen des Stellgliedes 5 des Potentiometers 1 ausgelöst wird oder daß unterschiedliche Arten von Alarmen in unterschiedlichen Positionsbereichen des Stellgliedes 5 ausgelöst werden, um z.B. gewaltsame Manipulationen von Unfällen oder unbeabsichtigten Blockierungen des Tores zu unterscheiden.

Die erfindungsgemäße Steuerschaltung für den Antrieb von Toren und insbesondere Garagentoren vereinigt einen einfachen Aufbau mit höchster Betriebssicherheit und Schutz gegen Unfälle und Manipulationen. Besonders vorteilhaft ist dabei außerdem, daß keine nennenswerten Verlustleistungen auftreten und daß der Motor 4 immer genau diejenige Betriebsspannung zur Verfügung gestellt bekommt, die dem tatsächlichen Bedarf für den Antrieb in der jeweiligen Position des Tores entspricht.

### Bezugszeichenliste

- 1: Zehnwendelpotentiometer
- 2: Integrator
- 3: Differenzverstärker
- 4: Antriebsmotor
- 5: Stellglied
- 6: Doppelpfeil
- 7: Spannungsbegrenzer
- 7, 10, 9: Bauteile
- 8: Störungsindikator
- 10: Gatter, Torschaltung
- 11: Potentiometer
- 11, 12, 13: Einstellelemente
- 14: Zwischengetriebe

## Patentansprüche

1. Verfahren zum Steuern von Torantrieben, insbesondere von Antrieben für Garagentore und dergleichen, bei welchem die Position des Tores in jedem Bewegungszustand erfaßt und die Energiezufuhr eines Antriebsmotors in Abhängigkeit von der erfaßten Torposition geregelt wird, dadurch gekennzeichnet, daß die Torposition in eine sich mit der Position verändernde elektrische Spannung als Istwert umgesetzt wird, die gemessen und mit einem Sollwert verglichen wird, wobei die Energiezufuhr und die Motordrehrichtung in Abhängigkeit von einem entsprechend der Abweichung des Istwertes vom Sollwert gemessenen Differenzsignal eingestellt wird, daß der Sollwert nach einem vorgebbaren Startsignal innerhalb eines vorgebbaren Zeitinervalls kontinuierlich zu- oder abnimmt und daß das gemessene Differenzsignal verstärkt und dem Motor als Betriebsspannung zugeführt wird.

2. Verfahren nach Anspruch 1, dadurch gekennzeichnet, daß die ab einem Startimpuls vergangene Zeit als weiterer Regelparameter für die Energiezufuhr des Antriebsmotors verwendet wird.

3. Verfahren nach Anspruch 1 oder 3, dadurch gekennzeichnet, daß bei Überschreiten eines Grenzwertes für den Betrag der Differenz zwischen Soll- und Istwert ein Alarmsignal ausgelöst wird.

4. Verfahren nach einem der Ansprüche 1 bis 3, dadurch gekennzeichnet, daß bei Überschreiten eines Grenzwertes für den Betrag der Differenz zwischen Soll- und Istwert ein Motorstopp ausgelöst wird.

5. Verfahren nach einem der Ansprüche 1 bis 4, dadurch gekennzeichnet, daß der Verstärkungsfaktor für Differenzspannung, deren Betrag unterhalb eines Schwellwertes (V₀) liegt, größer ist als für Differenzspannungen, deren Betrag oberhalb des Schwellwertes (V₀) liegt.

6. Verfahren nach Anspruch 5, dadurch gekennzeichnet, daß der Verstärkungsfaktor für die kleinen Differenzspannungen unterhalb des Schwellwertes zwischen zwei- und zehnmal so groß, vorzugsweise fünfmal so groß ist wie der Verstärkungsfaktor für die großen Differenzspannungen oberhalb des Schwellwertes.

7. Verfahren nach einem der Ansprüche 1 bis 6, dadurch gekennzeichnet, daß bei Überschreiten eines Grenzwertes für den Betrag der Betriebsspannung des Motors eine Störung angezeigt wird.

8. Verfahren nach Anspruch 7, dadurch gekennzeichnet, daß der Grenzwert von der Torposition abhängig ist.

9. Verfahren nach Anspruch 8, dadurch gekennzeichnet, daß die Torposition und der zugehörige Grenzwert in Form einer Tabelle gespeichert sind.

10. Verfahren nach einem der Ansprüche 1 bis 9, dadurch gekennzeichnet, daß die Spannungswerte für die Endanschläge nachträglich einstellbar sind.

11. Verfahren nach einem der Ansprüche 1 bis 10, dadurch gekennzeichnet, daß mehrere verschiedene Spannungswerte für die Fixierung des Tores in Zwischenpositionen vorgebbar sind.

12. Angetriebenes Tor, insbesondere Garagen- oder Einfahrttor, mit einem elektrisch betriebenen Antriebsmotor (4), Kraftübertragungseinrichtungen vom Motor auf das Tor und mit Einrichtungen (2, 8, 10) für das Starten und Stoppen des Antriebsmotors zumindest in seinen beiden Endpositionen, d.h. in einem vollständig geschlossenen und in einem vollständig geöffneten Zustand des Tores, wobei der Motor, das Tor und/oder die Kraftübertragungseinrichtungen mit einem Positionsmelder versehen sind, der einen von einer Meßeinheit (3) erfaßbaren und einer jeweiligen Torposition eindeutig zugeordneten Zustand annimmt, eine Meßeinheit (3) zur Erfassung dieser Position vorgesehen ist und ein Ausgang der Meßeinheit (3) direkt oder indirekt mit einem Steuerteil (7, 8, 9, 10) verbunden ist, welches die Energiezufuhr zum Antriebsmotor steuert, dadurch gekennzeichnet, daß der Positionsmelder ein Potentiometer ist und daß ein Regler mit einem Differenzeingang vorgesehen ist, an welchem einerseits die Positionsspannung und andererseits eine variabel vorgebbare Sollwertspannung anliegen, die am Ausgang eines eine kontinuerliche Zu- oder Abnahme der Sollwertspannung gewährleistenden Integrators (2) bereitgestellt wird.

13. Angetriebenes Tor nach Anspruch 12, dadurch gekennzeichnet, daß das Potentiometer (1) ein mehrgängiges, vorzugsweise ein zehngängiges Wendelpotentiometer ist.

14. Angetriebenes Tor nach einem der Ansprüche 12 oder 13, dadurch gekennzeichnet, daß das Potentiometer (1) mit beweglichen Teilen des Motors (4) oder des Tores zusammengekoppelt ist.

15. Angetriebenes Tor nach Anspruch 14, dadurch gekennzeichnet, daß das Potentiometer über ein Zwischengetriebe (14) mit der Motorwelle verbunden ist.

16. Angetriebenes Tor nach einem der Ansprüche 12 bis 15, dadurch gekennzeichnet, daß eine Spannungsquelle mit vorzugsweise konstanter Spannung vorgesehen ist, welche an den äußeren Endanschlüssen des Potentiometers (1) anliegt, während der Mittenabgriff mit dem Eingang (-) einer Meßeinheit (3) verbunden ist, so daß die Spannung zwischen dem Mittenabgriff und einem Endanschluß als Positionsmeßwert erfaßt wird.

17. Angetriebenes Tor nach einem der Ansprüche 12 bis 16, dadurch gekennzeichnet, daß für das Potentiometer (1) und den Integrator (2) eine gemeinsame Spannungsquelle, vorzugsweise eine Konstantspannungsquelle, vorgesehen ist.

18. Angetriebenes Tor nach einem der Ansprüche 12 bis 17, dadurch gekennzeichnet, daß Einstelleinrichtungen (11, 12) für einen Startwert und für einen Maximalwert des Integratorausganges vorgesehen sind.

19. Angetriebenes Tor nach einem der Ansprüche 12 bis 18, dadurch gekennzeichnet, daß eine Einstelleinrichtung (13) für die Zeitkonstante des Integrators vorgesehen ist.

20. Angetriebenes Tor nach einem der Ansprüche 12 bis 19, dadurch gekennzeichnet, daß ein Störungsindikator (8) mit dem Ausgang des Regelverstärkers und mit dem Positionsmelder verbunden ist, wobei in dem Störungsindikator (8) untere und obere Grenzwerte für den Betrag der Ausgangsspannung des Regelverstärkers (3) gespeichert sind und wobei der Störungsindikator beim Überschreiten der Grenzwerte ein Störsignal bereitstellt.

## Claims

1. A method of controlling door actuators, in particular actuators for garage doors and the like, in which the position of the door is detected in each state of motion and the supply of power to a drive motor is regulated in dependence on the detected door position, characterised in that the door position is converted into an electrical voltage which varies with the position as an actual value, which voltage is measured and compared to a reference value, wherein the supply of power and the direction of rotation of the motor is set in dependence on a difference signal measured in accordance with the deviation of the actual value from the reference value, that the reference value continuously increases or decreases after a predeterminable start signal within a predeterminable period of time and that the measured difference signal is amplified and fed to the motor as the operating voltage.

2. A method according to claim 1 characterised in that the time elapsed from a start pulse is used as a further regulating parameter for the supply of power to the drive motor.

3. A method according to claim 1 or claim 2 characterised in that an alarm signal is triggered off when a limit value in respect of the amount of the difference between the reference value and the actual value is exceeded.

4. A method according to one of claims 1 to 3 characterised in that a motor stop is triggered off when the amount of the difference between the reference value and the actual value is exceeded.

5. A method according to one of claims 1 to 4 characterised in that the gain factor for the difference voltage whose amount is below a threshold value (v₀) is greater than for difference voltages whose amount is above the threshold value (V₀).

6. A method according to claim 5 characterised in that the gain factor for the small difference voltages below the threshold value is between twice and ten times as great and preferably five times as great as the gain factor for the large difference voltages above the threshold value.

7. A method according to one of claims 1 to 6 characterised in that a fault is indicated when a limit value for the magnitude of the operating voltage of the motor is exceeded.

8. A method according to claim 7 characterised in that the limit value is dependent on the door position.

9. A method according to claim 8 characterised in that the door position and the associated limit value are stored in the form of a table.

10. A method according to one of claims 1 to 9 characterised in that the voltage values for the end stops can be subsequently set.

11. A method according to one of claims 1 to 10 characterised in that a plurality of different voltage values can be predetermined for fixing the door in intermediate positions.

12. An actuated door, in particular garage or vehicle entry doors, having an electrically operated drive motor (4), force-transmitting means from the motor to the door and means (2, 8, 10) for starting and stopping the drive motor at least in its two end positions, that is to say in a completely closed and a completely opened condition of the door, wherein the motor, the door and/or the force-transmitting means are provided with a position signalling device which assumes a state which can be detected by a measuring unit and which is clearly associated with a respective door position, there is provided a measuring unit (3) for detecting said position, and an output of the measuring unit (3) is directly or indirectly connected to a control portion (7, 8, 9, 10) which controls the supply of power to the drive motor, characterised in that the position signalling device is a potentiometer and that there is provided a regulator having a differential input to which are applied on the one hand the position voltage and on the other hand a variably predeterminable reference value voltage which is provided at the output of an integrator (2) for ensuring a continuous increase or decrease in the reference value voltage.

13. An actuated door according to claim 12 characterised in that the potentiometer (1) is a multi-gang, preferably a ten-gang helical potentiometer.

14. An actuated door according to one of claims 12 and 13 characterised in that the potentiometer (1) is coupled together with movable parts of the motor (4) or the door.

15. An actuated door according to claim 14 characterised in that the potentiometer is connected to the motor shaft by way of an intermediate transmission means (14).

16. An actuated door according to one of claims 12 to 15 characterised in that there is provided a voltage source with a preferably constant voltage, which is applied to the outer end terminals of the potentiometer (1) while the central tapping is connected to the input (-) of a measuring unit (3) so that the voltage between the central tapping and an end terminal is detected as the position measurement value.

17. An actuated door according to one of claims 12 to 16 characterised in that a common voltage source, preferably a constant voltage source, is provided for the potentiometer (1) and the integrator (2).

18. An actuated door according to one of claims 12 to 17 characterised in that there are provided setting means (11, 12) for a start value and for a maximum value of the integrator output.

19. An actuated door according to one of claims 12 to 18 characterised in that there is provided a setting means (13) for the time constant of the integrator.

20. An actuated door according to one of claims 12 to 19 characterised in that a fault indicator (8) is connected to the output of the regulating amplifier and to the position signalling device, wherein lower and upper limit values for the amount of the output voltage of the regulating amplifier (3) are stored in the fault indicator (8) and wherein the fault indicator produces a fault signal when the limit values are exceeded.

## Revendications

1. Procédé pour commander des mécanismes de porte, en particulier des mécanismes pour portes de garage et analogues, dans lequel la position de la porte est détectée dans chaque position, et l'apport d'énergie d'un moteur d'entraînement est régulé en fonction de la position détectée de la porte, caractérisé en ce que la position de la porte est convertie en une tension électrique qui varie avec la position, cette tension servant de valeur effective, qui est mesurée et qui est comparée à une valeur prescrite, l'apport d'énergie et le sens de rotation du moteur étant ajustés en fonction d'un signal différentiel, mesuré d'après l'écart entre la valeur effective et la valeur prescrite ; que la valeur prescrite augmente ou diminue d'une manière continue, après un signal de départ pouvant être prédéfini, à l'intérieur d'un intervalle de temps pouvant être prédéfini ; et que le signal différentiel mesuré est soumis à une amplification et est envoyé au moteur en tant que tension de service.

2. Procédé selon la revendication 1, caractérisé en ce qu'on utilise le temps qui s'est écoulé à partir d'une impulsion de départ, en tant que paramètre régulateur supplémentaire pour l'apport d'énergie du moteur d'entraînement.

3. Procédé selon la revendication 1 ou 2, caractérisé en ce qu'un signal d'alarme se déclenche quand la différence entre la valeur prescrite et la valeur effective passe au-delà d'une valeur limite.

4. Procédé selon l'une des revendications 1 à 3, caractérisé en ce qu'un arrêt du moteur se déclenche quand la différence entre la valeur prescrite et la valeur effective passe au-delà d'une valeur limite.

5. Procédé selon l'une des revendications 1 à 4, caractérisé en ce que le facteur d'amplification de la tension différentielle, dont la valeur est inférieure à une valeur seuil (V₀), est supérieur à celui des tensions différentielles dont la valeur est supérieure à la valeur seuil (V₀).

6. Procédé selon la revendication 5, caractérisé en ce que le facteur d'amplification des petites tensions différentielles est, en-dessous de la valeur seuil, de deux à dix fois plus grand, de préférence cinq fois plus grand que le facteur d'amplification des grandes tensions différentielles au-delà de la valeur seuil.

7. Procédé selon l'une des revendications 1 à 6, caractérisé par l'indication d'un incident quand la tension de service du moteur passe au-delà d'une valeur limite.

8. Procédé selon la revendication 7, caractérisé en ce que la valeur limite dépend de la position de la porte.

9. Procédé selon la revendication 8, caractérisé en ce que la position de la porte et la valeur limite correspondante sont mémorisées sous forme d'un tableau.

10. Procédé selon l'une des revendications 1 à 9, caractérisé en ce que les valeurs de la tension peuvent, pour les butées de fin de course, être ajustées après-coup.

11. Procédé selon l'une des revendications 1 à 10, caractérisé en ce que plusieurs valeurs différentes de la tension peuvent être prédéfinies pour la fixation de la porte dans des positions intermédiaires.

12. Porte motorisée, en particulier porte de garage ou porte cochère, comportant un moteur d'entraînement électrique (4), des dispositifs de transmission de force du moteur à la porte, ainsi que des dispositifs (2, 8, 10), destinés à provoquer le démarrage et l'arrêt du moteur d'entraînement dans au moins l'une de ses deux positions finales, c'est-à-dire dans un état de la porte entièrement fermé ou entièrement ouvert, où le moteur, la porte et/ou les dispositifs de transmission de force sont pourvus d'un indicateur de positionnement, qui prend un état pouvant être détecté par une unité de mesure (3), et qui est affecté d'une manière non univoque à chaque position de la porte, une unité de mesure (3) est prévue pour détecter cette position, et une sortie de l'unité de mesure (3) est directement ou indirectement reliée à un bloc de commande (7, 8, 9, 10), qui commande l'apport d'énergie au moteur d'entraînement, caractérisée en ce que l'indicateur de positionnement est un potentiomètre, et que l'on prévoit un régulateur, avec entrée différentielle, auquel sont appliquées d'une part la tension de positionnement, et d'autre part une tension prescrite, pouvant être prédéfinie d'une manière variable, et qui est mise à disposition au niveau de la sortie d'un intégrateur (2), qui assure une diminution ou une augmentation continue de la tension prescrite.

13. Porte motorisée selon la revendication 12, caractérisée en ce que le potentiomètre (1) est un potentiomètre bobiné à plusieurs spires, de préférence à dix spires.

14. Porte motorisée selon l'une des revendications 12 ou 13, caractérisée en ce que le potentiomètre (1) est couplé à des pièces mobiles du moteur (4) ou de la porte.

15. Porte motorisée selon la revendication 14, caractérisée en ce que le potentiomètre est relié à l'arbre moteur par une transmission intermédiaire (14).

16. Porte motorisée selon l'une des revendications 12 à 15, caractérisée en ce qu'on prévoit une source de tension ayant une tension de préférence continue, qui est appliquée aux connexions terminales extérieures du potentiomètre (1), tandis que la prise centrale est reliée à l'entrée (-) d'une unité de mesure (3), de façon que la tension entre la prise centrale et une connexion terminale soit détectée en tant que valeur de mesure de la position.

17. Porte motorisée selon l'une des revendications 12 à 16, caractérisée en ce qu'on prévoit pour le potentiomètre (1) et l'intégrateur (2) une source de tension commune, de préférence une source de tension constante.

18. Porte motorisée selon l'une des revendications 12 à 17, caractérisée en ce que des dispositifs de réglage (11, 12) sont prévus pour une valeur de départ et une valeur maximale de la sortie de l'intégrateur.

19. Porte motorisée selon l'une des revendications 12 à 18, caractérisée en ce qu'on prévoit un dispositif de réglage (13) pour la constante de temps de l'intégrateur.

20. Porte motorisée selon l'une des revendications 12 à 19, caractérisée en ce qu'un indicateur d'incident (18) est relié à la sortie de l'amplificateur-régulateur et à l'indicateur de positionnement, des valeurs limites inférieure et supérieure, s'appliquant à la valeur de la tension de sortie de l'amplificateur-régulateur (3), étant mémorisées dans l'indicateur d'incident (8), et l'indicateur d'incident mettant à disposition un signal de perturbation lors du dépassement des valeurs limites.
